# EUROPEAN PATENT APPLICATION

(11) **EP 2 618 407 A1**
(43) Date of publication of application: **24.07.2013**
(21) Application number: 11832271.8
(22) Date of filing: 07.10.2011
(51) Int. Cl.: H01M 4/48, H01G 9/058, H01M 4/36

(54) **POWDER FOR LITHIUM ION SECONDARY BATTERY NEGATIVE POLE MATERIAL, LITHIUM ION SECONDARY BATTERY NEGATIVE POLE AND CAPACITOR NEGATIVE POLE, AND LITHIUM ION SECONDARY BATTERY AND CAPACITOR**

(30) Priority: 15.10.2010 JP 2010232503
(71) Applicant: OSAKA Titanium Technologies Co., Ltd., Amagasaki-shi Hyogo 660-8533 (JP)
(72) Inventor: YASUDA, Kouji, Amagasaki-shi Hyogo 660-8533 (JP); FUJITA, Takehisa, Amagasaki-shi Hyogo 660-8533 (JP); KIZAKI, Shingo, Amagasaki-shi Hyogo 660-8533 (JP); SHIMOSAKI, Shinji, Amagasaki-shi Hyogo 660-8533 (JP)
(74) Representative: Simons, Amanda Louise
(86) International application number: PCT/JP2011/005648
(87) International publication number: WO 2012/049826

(57) **Abstract**

In a lithium ion secondary battery using a negative electrode material powder including a lower silicon oxide powder as a negative electrode material, a charge electric potential at 0.45-1.0 V relative to a Li reference upon initial charging results in a lithium ion secondary battery having a large discharge capacity with excellent cycle characteristics, which can be durable in practical use. On this occasion, the charge electric potential being 0.45-1.0 V relative to the Li reference upon initial charging means that an electric potential plateau caused by the generation of Li-silicate is observed, and the Li-silicate is uniformly generated in the negative electrode material. The negative electrode material powder according to the present invention having the charge electric potential of 0.45-1.0 V relative to the Li reference upon initial charging prevents the negative electrode material from being finely torn apart upon charging/discharging which results in cycle characteristic degradation, and excellent cycle characteristics are obtained. It is preferable for the negative electrode material powder according to the present invention to have an electrically conductive carbon film on the surface, and for the ratio of the electrically conductive carbon film to the surface of the powder to be 0.2-10 mass %.

## Description

### TECHNICAL FIELD

The present invention relates to a negative electrode material powder which makes it possible to obtain a lithium ion secondary battery having a large discharge capacity with excellent cycle characteristics, which can be durable in practical use. Moreover, the present invention relates to a negative electrode for lithium ion secondary batteries and a negative electrode for capacitors using the negative electrode material powder, and to a lithium ion secondary battery and a capacitor.

### BACKGROUND ART

Recently, as the portable electronic devices and communication devices, and the like have been remarkably developed, the development of a secondary battery having a high energy density is strongly demanded in the aspect of economy and reduction in size and weight of these devices. Presently, secondary batteries having a high energy density include nickel-cadmium batteries, nickel-metal hydride batteries, lithium ion secondary batteries, polymer batteries, and the like. Among these batteries, lithium ion secondary batteries have a particularly longer service life and a particularly higher capacity compared to nickel-cadmium batteries and nickel-metal hydride batteries, and the need therefor thus presents a high increase in the power supply market.

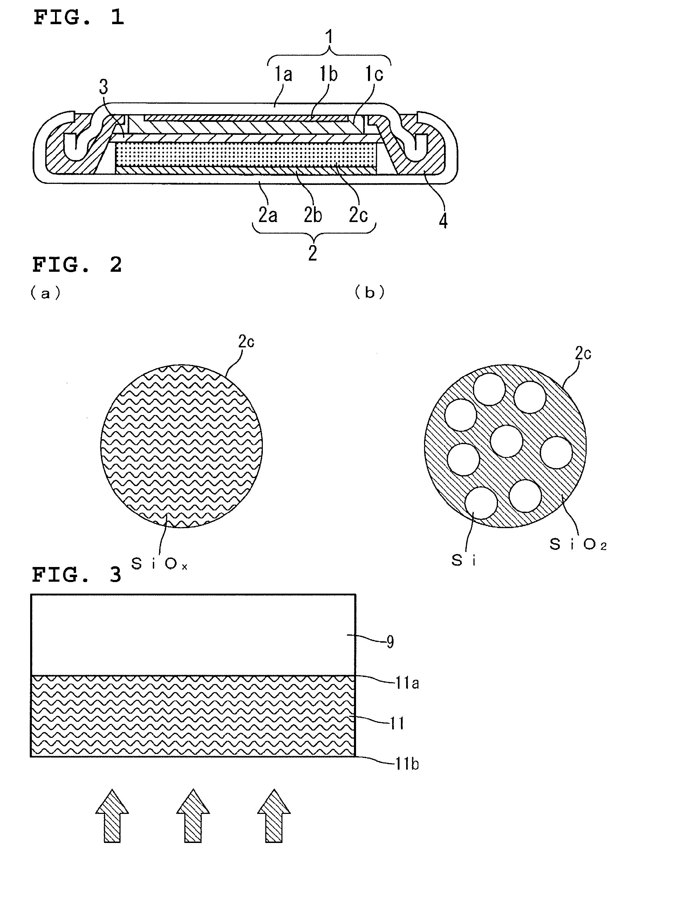

FIG. 1 shows a configuration example of a lithium ion secondary battery in a coin shape. The lithium ion secondary battery is formed by a positive electrode 1, a negative electrode 2, a separator 3 impregnated with an electrolyte, and a gasket 4 for maintaining electrical insulation between the positive electrode 1 and the negative electrode 2 and sealing the contents in the battery as shown in FIG. 1. When charging/discharging is carried out, lithium ions move back and forth through the electrolyte in the separator 3 between the positive electrode 1 and the negative electrode 2.

The positive electrode 1 is formed by a counter electrode case 1a, a counter electrode current collector 1b, and a counter electrode 1c, and lithium cobalt oxide (LiCoO₂) and Lithium Manganese Oxide (LiMn₂O₄) are mainly used for the counter electrode 1c. The negative electrode 2 is formed by a working electrode case 2a, a working electrode current collector 2b, and a working electrode 2c; and a negative electrode material used for the working electrode 2c is generally formed by an active material (negative electrode active material) which can occlude and release the lithium ions, a conductive additive, and a binder.

Conventionally, a carbon-based material has been used as the negative electrode active material for the lithium ion secondary battery. As a new negative electrode active material which increases the capacity of the lithium ion secondary battery compared to the conventional one, a complex oxide of lithium and boron, a complex oxide of the lithium and a transition metal (such as V, Fe, Cr, Mo, Ni, and the like), a chemical compound containing Si, Ge or Sn, N, and O, Si particles coated by a carbon layer on a surface by means of chemical vapor deposition, and the like are proposed.

Although any of these negative electrode active materials can increase the charging/discharging capacity and increase the energy density, they exhibit large expansion and contraction when the lithium ions are occluded and released. As a result, the lithium ion secondary battery using these negative electrode active material exhibit an insufficient characteristic in maintaining a discharge capacity (referred to as "cycle characteristic(s)" hereinafter) after repeated charging/discharging.

In contrast, use of a powder of silicon oxide represented by SiOₓ (0<x≤2) such as SiO as the negative electrode active material has been attempted. The silicon oxide powder exhibits a small degradation such as the collapse of the crystal structure and the generation of irreversible substance that may be caused by the occlusion and release of the lithium ions during the charging and discharging, and can be a negative electrode active material having larger effective charging/discharging capacity. Therefore, it is expected that a lithium ion secondary battery having higher capacity compared to the case where the carbon is used and excellent cycle characteristics compared to the case where a high capacity negative electrode active material such as Si and Sn alloy is used be obtained by using the silicon oxide powder as the negative electrode active material.

For example, Patent Literature 1 proposes a manufacturing method of a lithium ion secondary battery including using an oxide of silicon and lithium or a lithium-containing material as both electrodes, disposing the electrodes opposite each other in a nonaqueous electrolyte, supplying a current between both the electrodes, and using a lithium-containing silicon oxide obtained by electrochemically occluding lithium ions, or a lithium-containing silicon oxide obtained by mixing silicon or silicon compound, and lithium or lithium compound and heating the mixture as a negative electrode active material. However, this lithium ion secondary battery has a large irreversible capacity upon an initial charging/discharging (namely, does not have sufficient initial efficiency), and it does not seem that the cycle characteristic is sufficient in practical use, according to a study by the present inventors.

Moreover, Patent Literature 2 proposes a manufacturing method of an amorphous silicon oxide powder including mixing a silicon dioxide powder and a metal silicon powder into raw materials, heating the mixed raw materials to 1100-1600°C in an inert gas atmosphere or under a depressurized condition to generate a silicon oxide (SiO) gas, depositing the generated gas as silicon oxide (SiOₓ) on a substrate surface cooled to 200-500°C, and collecting the deposited silicon oxide.

Patent Literature 3 proposes a conductive silicon complex for a nonaqueous electrolyte secondary battery negative electrode where a carbon film is formed on a surface of particles (conductive silicon complex) having a structure where fine crystals of silicon are distributed in the silicon dioxide and a manufacturing method thereof. According to Patent Literature 3, the conductive silicon complex on which the carbon film is formed is obtained by using a silicon oxide powder represented generally by a chemical formula SiOₓ (1.0≤x<1.6) as starting material, applying heat treatment to the material at a predetermined temperature under a predetermined atmosphere conditions, disproportionating the material into the complex of silicon and silicon dioxide, and depositing the carbon film on the surface thereof by means of the chemical vapor deposition.

### CITATION LIST

### PATENT LITERATURE

PATENT LITERATURE 1: Japanese Patent No. 2997741
PATENT LITERATURE 2: Japanese Patent No. 3824047
PATENT LITERATURE 3: Japanese Patent No. 3952180

### SUMMARY OF INVENTION

### TECHNICAL PROBLEM

The present inventors have carried out various studies on the amorphous silicon oxide powder (SiOₓ) proposed by Patent Literature 2, and the silicon oxide powder containing silicon and silicon dioxide obtained by the disproportionation proposed by Patent Literature 3. As a result, the inventors have found out the fact that the behavior of a lithium ion secondary battery electrode is different between the case where the amorphous silicon oxide powder is used as the negative electrode material (negative electrode active material) and the case where the disproportionated silicon oxide powder is used as the negative electrode material.

FIGS. 2(a) and (b) each are schematic diagrams, each showing the state of distribution of particles in negative electrode materials for lithium ion secondary batteries, in which FIG. 2(a) shows the case where an amorphous silicon oxide powder is used as the negative electrode material, and FIG. 2(b) shows the case where a disproportionated silicon oxide powder is used as the negative electrode material. If the amorphous silicon oxide powder is used, the negative electrode material exhibits a state where the silicon oxide (SiOₓ) is uniformly distributed as shown in FIG. 2(a). Meanwhile, if the disproportionated silicon oxide powder is used, the negative electrode material exhibits a state where silicon (Si) is dispersed in the silicon dioxide (SiO₂), resulting in an ununiformed distribution as shown in FIG. 2(b).

Moreover, a reaction represented by the following formula (1) develops in the negative electrode material upon initial charge in the lithium ion secondary battery using the amorphous silicon oxide powder. On this occasion, x = 1 for the silicon oxide (SiOₓ) powder.

4SiO+17.2Li⁺+17.2e⁻→3Li_{4.4}Si+Li₄SiO₄ (1)

An Si-Li alloy (Li_{4.4}Si) appearing at a first term on the right side is a component working for an reversible capacity, and Li silicate (Li₄SiO₄) appearing at the second term on the right side is a component responsible for an irreversible capacity in the formula (1). On this occasion, the Li silicate cannot release the lithium ions, and thus acts to work for the irreversible capacity.

If the amorphous silicon oxide powder are used as the negative electrode material, and the reaction represented by the formula (1) develops in the negative electrode material upon initial charge, the silicon oxide (SiOₓ) is uniformly distributed as shown in FIG. 2(a), and the Li silicate is thus uniformly generated in the negative electrode material. According to the study by the present inventors, if the silicon oxide (SiOₓ) where x=1 is used as the negative electrode material, theoretical characteristics of the lithium ion secondary battery are represented as a reversible capacity of 2007 mAh/g and an initial efficiency of 76% based on the reaction represented by the formula (1).

Meanwhile, if the silicon oxide powder where x=1 are disproportionated, the reaction represented by the following formula (2) progresses, and silicon and silicon dioxide are generated.

4SiO→2Si+2SiO₂ (2)

In a lithium ion secondary battery using the silicon oxide powder disproportionated by the reaction as the negative electrode material, silicon and silicon dioxide contained in the negative electrode material respectively exhibit reactions represented by the following formulas (3) and (4) upon initial charge.

2Si+8.8Li⁺+8.8e⁻→2Li_{4.4}Si (3)

2SiO₂+8.4Li⁺+8.4e⁻→Li_{4.4}Si+Li₄SiO₄ (4)

On this occasion, the silicon dioxide does not have the electron conductivity and the Li conductivity, and the reaction represented by the formula (4) does not easily develop. Moreover, as described referring to FIG. 2(b), in the negative electrode material using the disproportionated silicon oxide powder, the silicon is dispersed in the silicon dioxide, resulting in the ununiformed distribution. As a result, in the silicon dioxide contained in the negative electrode material, only a part of the silicon dioxide near an interface with Si exhibits the reaction represented by the formula (4). As a result, the Li silicate generated in the negative electrode material as a result of the reaction represented by formula (4) exhibits an ununiformed distribution.

The following formula (5) is derived by representing the proportion of the silicon dioxide exhibiting the reaction of the formula (4) as y (where 0≤y≤1), and summarizing the formulas (2) to (4).

4SiO+(8.8+8.4y)Li⁺+(8.8+8.4y)e⁻(2+y)Li_{4.4}Si+yLi₄SiO₄+(2-2y)SiO₂ (5)

As a result of the study by the present inventors based on the reaction represented by the formula (5), a theoretical characteristic of the lithium ion secondary battery using the disproportionated silicon oxide powder is represented as a reversible capacity of 2007 mAh/g regardless of the value of y. Meanwhile, the initial efficiency is 100 % if y=0, namely, the reaction represented by the formula (4) does not occur, and is 76 % if y=1, namely, all the silicon dioxide exhibits the reaction represented by the formula (4).

In this way, the case where the amorphous silicon oxide powder is used and the case where the disproportionated silicon oxide powder is used exhibit the different behaviors upon initial charging of the lithium ion secondary battery. Further the present inventors have studied and summarized behaviors after the second and subsequent cycles of both of them. Table 1 represents the theoretical initial efficiencies, the theoretical efficiencies for the second and subsequent cycles, capabilities of suppression of volume expansion, and the cycle characteristics of the lithium ion secondary batteries using the amorphous silicon oxide powder and the disproportionated silicon oxide powder.

[Table 1]

**Table 1**

| Evaluated item | The case using amorphous silicon oxide powder | The case using disproportionated silicon oxide powder |
|---|---|---|
| Theoretical initial efficiency | Δ 76% | ○ 76-100% |
| Theoretical efficiency for second and subsequent cycles | ○ 100% | Δ below 100% |
| Capability of suppression of volume expansion of negative electrode material | ○ Li silicate with a high capability of suppression of volume expansion is uniformly generated | × Li silicate is not uniformly generated. Silicon dioxide with a low capability of suppression of volume expansion exists |
| Cycle characteristics | ○ good | × poor |

The theoretical initial efficiency is 76% for the case using the amorphous silicon oxide powder, while being 76-100% for the case using the disproportionated silicon oxide powder as described above, and the case using the disproportionated silicon oxide powder exhibits a better efficiency. However, even upon charging after the second and subsequent cycles, Li silicate responsible for the irreversible capacity is generated from a part of the remaining silicon dioxide generated by the reaction represented by the formula (4), and the efficiency for the second and subsequent theoretical cycles does not reach 100% for the case using the disproportionated silicon oxide powder. Meanwhile, if the amorphous silicon oxide powder is used, the Li silicate is uniformly generated by the reaction represented by the formula (1) upon initial charging, the irreversible capacity does not increase in the second and subsequent cycles, and the theoretical efficiency for the second and subsequent theoretical efficiency reaches 100%.

On this occasion, in the lithium ion secondary battery, both in the case using the amorphous silicon oxide powder and the case using the disproportionated silicon oxide powder, a component working for the reversible capacity expands/contracts by occluding and releasing the lithium ions during the charging/discharging, resulting in a volume change of the negative electrode material. If the particles of the negative electrode material adjusted to a predetermined granularity are finely crashed during the expansion/contraction, the cycle characteristic decreases. Thus, it is required for the amorphous silicon oxide powder and disproportionated silicon oxide powder to have such a capability that the component responsible for the irreversible capacity suppresses a volume change, particularly an expansion of the chemical component working for the reversible capacity.

In terms of the capability of suppression of the volume expansion, if the Li silicate and the silicon dioxide each serving as the irreversible capacity component are compared, the Li silicate is higher and the silicon dioxide is lower. If a disproportionated silicon oxide powder is used, the irreversible capacity component includes the silicon dioxide contained in the silicon oxide powder and the Li silicate generated by the reaction represented by the formula (4). However, the silicon dioxide is lower in the capability of suppression of the volume expansion, and the generated Li silicate is present in the ununiformed distribution. As a result, if the disproportionated silicon oxide powder is used, the action of suppressing the volume expansion by the irreversible capacity component is not sufficient, the negative electrode material comes to be finely torn apart, resulting in a decrease in cycle characteristic after the charging/discharging are repeated.

Meanwhile, if the amorphous silicon oxide powder is used, the irreversible capacity component is the Li silicate, and the generated Li silicate is uniformly distributed in the negative electrode material. As a result, the capability of suppression of the volume expansion becomes excellent, that the negative electrode comes to be finely torn apart can be reduced, and the cycle characteristic becomes excellent.

The amorphous silicon oxide powder having excellent cycle characteristics is obtained by mixing silicon dioxide powder and metal silicon powder to form raw materials, heating the mixed raw materials to generate a silicon oxide (SiO) gas, supplying a substrate which has been cooled to a predetermined temperature with the generated silicon oxide gas, depositing the silicon oxide gas as silicon oxide (SiOₓ) by means of the vapor deposition, and pulverizing the deposited silicon oxide as proposed by Patent Literature 2.

FIG. 3 is a schematic diagram showing a state where a silicon oxide (SiO) gas is supplied to a substrate, and the silicon oxide gas is deposited into silicon oxide (SiOₓ) by means of the vapor deposition when the amorphous silicon oxide powder is manufactured. FIG. 3 shows a substrate 9 on which the deposition is carried out, and a deposited silicon oxide (SiOₓ) 11 precipitated on the substrate. When the deposited silicon oxide is obtained from the silicon oxide gas, the silicon oxide gas is fed to the substrate 9 from below as hatched arrows show in FIG. 3, and is deposited as a deposited silicon oxide 11 by means of the vapor deposition. In the neighborhood of an interface 11a between the deposited silicon oxide and the substrate 9, the substrate is usually cooled to a predetermined temperature by cooling water communicating inside thereof, and is thus maintained to a low temperature.

However, in the method for depositing the deposited silicon oxide on the substrate as shown in FIG. 3, a deposition surface 11b on which the supplied silicon oxide gas is deposited, among the surface of the deposited silicon oxide, is heated by radiant heat from the heated raw materials and the supplied silicon oxide gas at a high temperature. When the deposited silicon oxide becomes a thick film, since the silicon oxide (SiOₓ) has high thermal insulation (low in heat conductivity), the cooling effect by the substrate does not reach the vapor deposition surface of the deposited silicon oxide, and thus the vicinity of the vapor deposition surface of the deposited silicon oxide reaches a high temperature.

On this occasion, the deposited silicon oxide is disproportionated into silicon and silicon dioxide if the temperature exceeds 900-1000°C. Therefore, in the conventional manufacturing method of the amorphous silicon oxide powder, the vicinity of the vapor deposition surface of the deposited silicon oxide reaches a high temperature, and the disproportionation into silicon and silicon dioxide occurs. As a result, the amorphous silicon oxide powder obtained by pulverizing the deposited silicon oxide contains silicon and silicon dioxide generated by the disproportionation reaction.

The present invention is devised in view of this situation and has an object to provide a negative electrode material powder for lithium ion secondary batteries having a large discharge capacity with excellent cycle characteristics, which can be durable in practical use, a lithium ion secondary battery negative electrode and a capacitor negative electrode using the negative electrode material powder, and a lithium ion secondary battery and a capacitor using the lithium ion secondary battery negative electrode and the capacitor negative electrode.

### SOLUTION TO PROBLEM

As mentioned before, the amorphous silicon oxide powder has excellent cycle characteristics when used as the negative electrode material for the lithium ion secondary battery compared to the disproportionated silicon oxide powder. Thus, the present inventors assumed that it is important to use amorphous silicon oxide powder restrained in the disproportionation as the negative electrode material so as to generate Li silicate more uniformly in the electrode material in order to increase the cycle characteristic.

Then, the present inventors carried out various tests in order to obtain an amorphous silicon oxide powder completely restrained in the disproportionation action when the silicon oxide gas is supplied to the substrate to deposit the deposited silicon oxide, and intensively repeated studies. As a result, when the silicon oxide gas is supplied to the substrate to deposit the deposited silicon oxide, the present inventors have found that deposited silicon oxide completely restrained in disproportion reaction is obtained by controlling the temperature of the vapor deposition surface of the deposited silicon oxide and the film thickness of the deposited silicon oxide.

Further, the present inventors predicted that, in a lithium ion secondary battery using, as the negative electrode material, a silicon oxide powder obtained from the deposited silicon oxide restrained in disproportion reaction, an electric potential plateau be observed in a charge curve (capacity-electric potential) upon initial charging when the Li silicate is uniformly generated. As a result of the study by the present inventors, a generation electric potential of the Li silicate is equal to or less than 0.97 V relative to the Li reference, and a generation electric potential of Si-Li alloy is equal to or less than 0.58 V relative to the Li reference. Based on this prediction, a test for producing a lithium ion secondary battery using the amorphous silicon oxide powder restrained in disproportion reaction upon the deposition and measuring the capacity and the electric potential upon initial charging so as to obtain the charge curve was carried out.

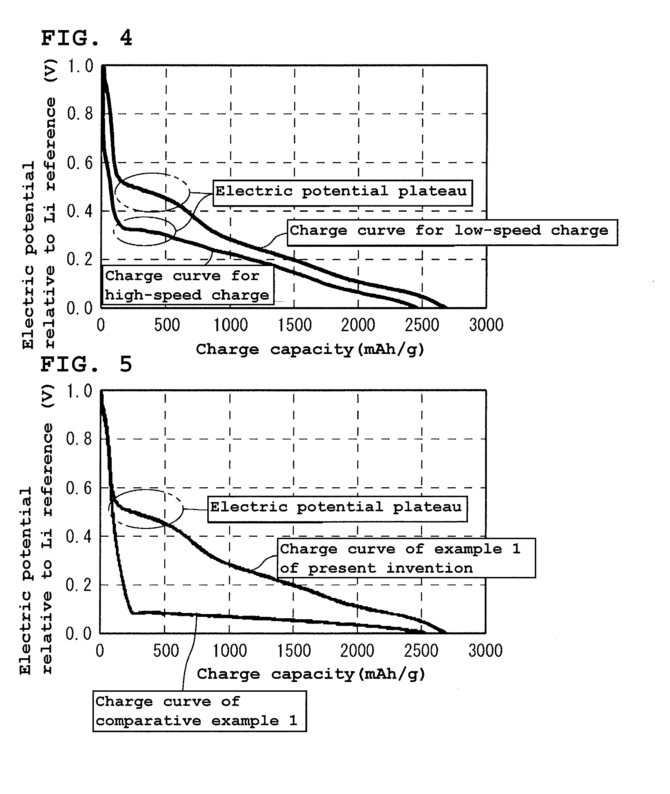

FIG. 4 shows charge curves upon initial charging for a lithium ion secondary battery using the amorphous silicon oxide powder according to the present invention. For a test for obtaining the charge curves shown in FIG. 4, an amorphous silicon oxide powder obtained from the deposited silicon oxide restrained in disproportion reaction according to Example 1 of the present invention of an embodiment described later were used. Moreover, FIG. 4 shows a charge curve upon initial charging by means of a low speed charge and a charge curve upon initial charging by means of a high speed charge. The initial charge curve by means of the low speed charge is a charge curve upon initial charge by means of a low-speed charge described as the Example 1 of the present invention of the embodiment described later, and the charging was carried out at a current of 15 mA/g per 1 g of silicon oxide powder. Meanwhile, the initial charging by means of the high-speed charge was carried out while the current was 150 mA/g per 1 g of silicon oxide powder and the other conditions were the same as those for the low-speed charge.

An electric potential plateau is observed at an electric potential less noble than approximately 0.35 V relative to the Li reference for the initial charging by means of the high-speed charge from FIG. 4. The electric potential plateau is significantly less noble than the generation electric potential of Si-Li alloy (equal to or less than 0.58 V relative to the Li reference) obtained by calculation, and it is considered that the electric potential plateau is not an electric potential plateau due to the generation of only the Li silicate, but is an electric potential plateau due to the generation of the Li silicate and the Si-Li alloy. Meanwhile, an electric potential plateau is observed at an electric potential at approximately 0.5 V with respect to the Li reference upon initial charging by means of the low-speed charge. This electric potential plateau is much nobler than the electric potential plateau due to the generation of the Si-Li alloy confirmed in the case of the high-speed charge, and is considered as the electric potential plateau due to the generation of only the Li silicate.

While the generation electric potential for the Li silicate is equal to or less than 0.97 V relative to the Li reference, and the generation electric potential for the Si-Li alloy is equal to or less than 0.58 V relative to the Li reference by means of calculation, the observed generation electric potential of the Li silicate was approximately 0.5 V relative to the Li reference, and it is considered that the difference between them is due to an IR drop caused by an electric resistance. Then, in a lithium ion secondary battery using a silicon oxide powder including a complex of disproportionated silicon and silicon dioxide, a test for obtaining a charge curve upon initial charging by means of the low-speed charge was carried out, and an electric potential exhibiting an electric potential plateau was confirmed.

FIG. 5 shows charge curves upon initial charging by means of the low-speed change for lithium ion secondary batteries using an amorphous silicon oxide powder according to the present invention or a disproportionated silicon oxide powder in the background art. In FIG. 5, a curve represented as a charge curve for Example 1 of the present invention is a charge curve for the test which uses the amorphous silicon oxide powder obtained from the deposited silicon oxide restrained in the disproportionation reaction and is indicated as Inventive Example 1 of the present invention of the embodiment described later. Moreover, a curve represented as a charge curve for Comparative Example 1 is a charge curve obtained for a lithium ion secondary battery using the disproportionated silicon oxide powder, and for a test indicated as Comparative Example 1 in the embodiment section described later.

As seen from FIG. 5, in the case where the disproportionated silicon oxide powder is used (Comparative Example 1), the electric potential rapidly decreases until the electric potential is equal to or less than 0.1 V relative to the Li reference after the start of the charging. Thus, the electric potential plateau due to the generation of the Li silicate is not observed for the case (Comparative Example 1) where the disproportionated silicon oxide powder is used. As a result, the fact that the electric potential plateau due to the even generation of the Li silicate is observed upon initial charging by means of the low-speed charge for the lithium ion secondary battery using the amorphous silicon oxide powder restrained in disproportionation reaction upon the deposition, and is not observed in the case where the disproportionated silicon oxide powder is used becomes apparent.

The present inventors further carried out various tests and found out, as a result of intensive repeated studies, that if the electric potential plateau is observed at an electric potential equal to or more than 0.45 V relative Li upon initial charging by means of the low speed charge, the Li silicate is uniformly generated in the negative electrode material upon initial charging, resulting in an increase in cycle characteristic.

The present invention has been completed based on the aforementioned findings, and as summaries, includes negative electrode material powders for lithium ion secondary batteries as in the following (1)-(5), a lithium ion secondary battery negative electrode and a capacitor negative electrode as in the following (6), and a lithium ion secondary battery and a capacitor as in the following (7).

(1) A negative electrode material powder for lithium ion secondary batteries comprising a lower silicon oxide powder as a negative electrode material, in which a charge electric potential is 0.45-1.0 V relative to a Li reference upon initial charging.

(2) The negative electrode material powder for lithium ion secondary batteries according to the aforementioned (1), in which the surface of the lower silicon oxide powder has an electrically conductive carbon film.

(3) The negative electrode material powder for lithium ion secondary batteries according to the aforementioned (2), wherein the proportion of the electrically conductive carbon film to the surface of the lower silicon oxide powder is 0.2-10 mass %.

(4) The negative electrode material powder for lithium ion secondary batteries according to any of the aforementioned (1) to (3), wherein a maximum value P1 of a halo derived from SiOₓ appearing at 2θ=10°-30° and a maximum value P2 of the strongest line peak of Si (111) appearing at 2θ=28.4+0.3° measured by an X-ray diffractometer using CuK_{α} ray satisfy P2/P1<0.01.

(5) The negative electrode material powder for lithium ion secondary batteries according to any of the aforementioned (1) to (4), wherein a specific surface area measured by means of the BET method is 0.3-5 m²/g.

(6) A negative electrode for lithium ion secondary batteries or a negative electrode for capacitors using the negative electrode material powder for lithium ion secondary batteries according to any of the aforementioned (1) to (5).

(7) A lithium ion secondary battery or a capacitor using the negative electrode for lithium ion secondary batteries or the negative electrode for capacitors according to the aforementioned (6).

In the present invention, "lower silicon oxide powder" refers to a powder of SiOₓ satisfying 0.4≤x≤1.2. A method for measuring the value of x will be described later.

"A charge electric potential is 0.45-1.0 V relative to the Li reference upon initial charging" means that the charge electric potential obtained from initial charge curve (capacity-voltage) by means of the low speed charge is 0.45-1.0 V relative to the Li reference as described later, namely that the electric potential plateau due to the generation of the Li silicate is observed, and the Li silicate is uniformly generated in the negative electrode material. A method for obtaining the initial charge curve by means of the low-speed charge and a method for obtaining the charge electric potential from the initial charge curve will be described later.

"A surface has an electrically conductive carbon film" means that a value Si/C of a molar ratio of Si to C is equal to or less than 0.02 as a result of a surface analysis by using the X-ray photoelectric spectroscopic analyzer as described later, namely a state where most of the surface of the lower silicon oxide powder is covered with C, and almost no Si is exposed. A method for measuring a specific surface area by means of the BET method will be described later.

### ADVANTAGEOUS EFFECTS OF INVENTION

A lithium ion secondary battery and a capacitor having a large discharge capacity with excellent cycle characteristics, which can be durable in practical use can be provided by using the negative electrode material powder for lithium ion secondary batteries, and the lithium ion secondary battery negative electrode or the capacitor negative electrode according to the present invention. Moreover, the lithium ion secondary battery and the capacitor according to the present invention have a large discharge capacity and excellent cycle characteristics.

### BRIEF DESCRIPTION OF DRAWINGS

[FIG. 1] FIG. 1 is a diagram showing a configuration example of a lithium ion secondary battery in a coin shape.
[FIG. 2] FIG. 2(a) and FIG. 2(b) each are schematic diagrams, each showing the state of distribution of particles in negative electrode materials for lithium ion secondary batteries, in which FIG. 2(a) shows the case of using an amorphous silicon oxide powder as the negative electrode material, and FIG. 2(b) shows the case of using a disproportionated silicon oxide powder as the negative electrode material.
[FIG. 3] FIG. 3 is a schematic diagram showing a state where a silicon oxide (SiO) gas is supplied to a substrate and the silicon oxide gas is deposited into silicon oxide (SiOₓ) by means of the vapor deposition upon manufacturing the amorphous silicon oxide powder.
[FIG. 4] FIG. 4 is a chart showing charge curves upon initial charging for a lithium ion secondary battery using the amorphous silicon oxide powder according to the present invention.
[FIG. 5] FIG. 5 is a chart showing charge curves upon initial charging by means of the low-speed change for lithium ion secondary batteries using an amorphous silicon oxide powder according to the present invention or a disproportionated silicon oxide powder in the background art.
[FIG. 6] FIG. 6(a) and FIG. 6(b) each are charts, each describing a method for obtaining a charge electric potential defined in the present invention based on the initial charge curve by means of the low-speed charge, in which FIG. 6(a) shows a charge curve for Inventive Example 1 of the present invention, and FIG. 6(b) shows a charge curve for Comparative Example 1.
[FIG. 7] FIG. 7 is a schematic diagram showing a configuration example of a manufacturing device for lower silicon oxide.

### DESCRIPTION OF EMBODIMENTS

### 1. A negative electrode material powder for lithium ion secondary batteries according to the present invention

A negative electrode material powder according to the present invention includes a lower silicon oxide powder and has a charge electric potential of 0.45-1.0 V relative to a Li reference upon initial charging in a lithium ion secondary battery using the negative electrode material powder as a negative electrode material.

The lower silicon oxide powder is a powder of SiOₓ satisfying 0.4≤x≤1.2 as described before. The reason for setting x within this range is that if the value of x is less than 0.4, a lithium ion secondary battery and a capacitor using the negative electrode material powder according to the present invention rapidly degrade along with charging/discharging cycle, and if the value of x exceeds 1.2, the capacity of the battery decreases. Moreover, the value of x preferably satisfies 0.8≤x≤1.05.

The condition that a charge electric potential is 0.45-1.0 V relative to the Li reference upon initial charging means, as mentioned above, that the charge electric potential which can be obtained from initial charge curve (capacity-voltage) by means of the low speed charge is 0.45-1.0 V relative to the Li reference, namely that the electric potential plateau due to the generation of the Li silicate is observed, and the Li silicate is uniformly generated in the negative electrode material.

As described before, if the silicon oxide powder including the complex of disproportionated silicon and silicon dioxide is used as the negative electrode material for a lithium ion secondary battery, the silicon dioxide low in capability of suppression of volume expansion exists, and generated Li silicate is ununiformly distributed, and the negative electrode material comes to be finely torn apart upon the charging/discharging, resulting in a decrease in cycle characteristic. In contrast, the negative electrode material powder according to the present invention uniformly generate Li silicate upon initial charging, the Li silicate having high capability of suppression of volume expansion, and the negative electrode material is prevented from being finely torn apart upon the charging/discharging. As a result, the cycle characteristic of the lithium ion secondary battery can be increased.

If the charge electric potential upon initial charging is less than 0.45 V relative to the Li reference, the distribution of the Li silicate generated in the negative electrode material becomes ununiform, and the volume expansion cannot be suppressed upon the charging/discharging, resulting in a decrease in cycle characteristic. Meanwhile, the method for obtaining the charge electric potential from a charge curve described later defines a start point as a point where the charge capacity is 0 mAh/g and the electric potential is 1.0 V relative to the Li reference, and the upper limit of the charge electric potential is thus 1.0 V relative to the Li reference. Moreover, as the value of the charge electric potential upon initial charging increases, the Li silicate is more uniformly generated, resulting in an increase in cycle characteristic. It is preferable for the charge electric potential upon initial charging to be equal to or more than 0.5 V relative to the Li reference.

It is preferable for the negative electrode material powder according to the present invention to include an electrically conductive carbon film on a surface of the lower silicon dioxide powder. A discharge capacity of a lithium ion secondary battery using the lower silicon oxide powder as the negative electrode material powder can be improved by forming the conductive carbon film on the lower silicon oxide powder as an insulator.

It is preferable for the negative electrode material powder according to the present invention to have 0.2-10 mass % of the proportion of the conductive carbon film. If the proportion of the carbon film is less than 0.2 mass %, an effect of imparting the electrically conductive property to the lower silicon oxide powder having the carbon film cannot be provided. Meanwhile, the proportion of the carbon film exceeds 10 mass %, the degree of the carbon film contributing to the charging/discharging capacity increases. In this case, the charging/discharging capacity per unit mass of the carbon film is lower than that of the lower silicon oxide, and the charging/discharging capacity of a lithium ion secondary battery decreases. The proportion of the carbon film is preferably 0.2-2.5 mass %.

It is preferable for the negative electrode material powder according to the present invention to satisfy a condition where a maximum value P1 of a halo derived from SiOₓ appearing at 2θ=10°-30° and a maximum value P2 of the strongest line peak of Si (111) appearing at 2θ=28.4+0.3° measured by an X-ray diffractometer using CuK_{α} ray have a relation P2/P1<0.01, namely they are amorphous. This is because, as described before, if the amorphous lower silicon oxide powder is used for the negative electrode material for a lithium ion secondary battery, the Li silicate high in capability of suppression of the volume expansion is uniformly generated, resulting in an increase in cycle characteristic.

The negative electrode material powder according to the present invention preferably has a specific surface area measured by means of the BET method of 0.3-5 m²/g. If the specific surface area of the negative electrode material powder is small, an irreversible capacity component can be restrained from being generated on an electrode surface upon initial charging. The powder having 1-15 µm of mean particle diameter (D₅₀) often used as the negative electrode material have a specific surface area equal to less than 5 m²/g, the generated quantity of the irreversible capacity component is small enough, and the performance of a lithium ion secondary battery is excellent. However, the manufacture of the powder having a specific surface area smaller than 0.3 m²/g is difficult for commercialization from an economical point of view. The specific surface area measured by means of the BET method is more preferably 0.5-3 m²/g.

### 2. Analysis method

### 2-1. Method for obtaining charge electric potential upon initial charging

The charge electric potential relative to the Li reference upon initial charging can be obtained by the following procedure for the negative electrode material powder according to the present invention. The procedure stipulates that a lithium ion secondary battery in a coin shape shown in FIG. 1 is produced, the initial charging is carried out by means of the low-speed charge using the produced lithium ion secondary battery, the capacity and the voltage upon initial charging are measured, and the charge electric potential is obtained from an obtained initial charge curve.

### (1) Production of negative electrode for lithium ion secondary batteries

Slurry is produced by adding N-methylpyrrolidone to a mixture including 80 mass % of the negative electrode material powder, 5 mass % of Ketjenblack, and 15 mass % PI (polyimide). The produced slurry is applied to a copper foil having a thickness of 35 µm so that the thickness of an active material layer is 20-30 µm, and the electrode mass is 0.9-1.3g/cc. After the copper foil on which the slurry is applied is dried for 15 minutes in an atmosphere at 80°C, the copper foil is punched into a size of 11 mm in diameter, and is further dried for 60 minutes in vacuum at 300°C, thereby obtaining the negative electrode 2.

### (2) Production of lithium ion secondary battery

A counter electrode 1c is a lithium foil having a diameter of 13 mm. An electrolyte of the separator 3 is a solution obtained by dissolving LiPF₆ (lithium hexafluorophosphate) in a mixed liquid having a volume ratio of 1:1 of EC (ethylene carbonate) and DEC (diethyl carbonate) so that LiPF₆ is in the proportion of 1 mole/litter. A polyethylene porous film having a thickness of 30 µm is used as the separator 3.

### (3) Low-speed charge of lithium ion secondary battery

A secondary battery charging/discharging test device (manufactured by Nagano Corporation) can be used for the charging. The charging is carried out by means of a constant current charge at a value corresponding to 0.01 C (15 mA/g per 1 g of the lower silicon oxide powder) if the discharge capacity of the lower silicon oxide powder is 1500 mAh/g until the voltage between both electrodes of the lithium ion secondary battery reaches 0 V. On this occasion, the capacity and the voltage are measured every two minutes. An obtained relationship between the capacity and the voltage (electric potential relative to the Li reference) upon initial charging by means of the low-speed charge is plotted in a chart.

### (4) Acquisition of charge electric potential from initial charge curve

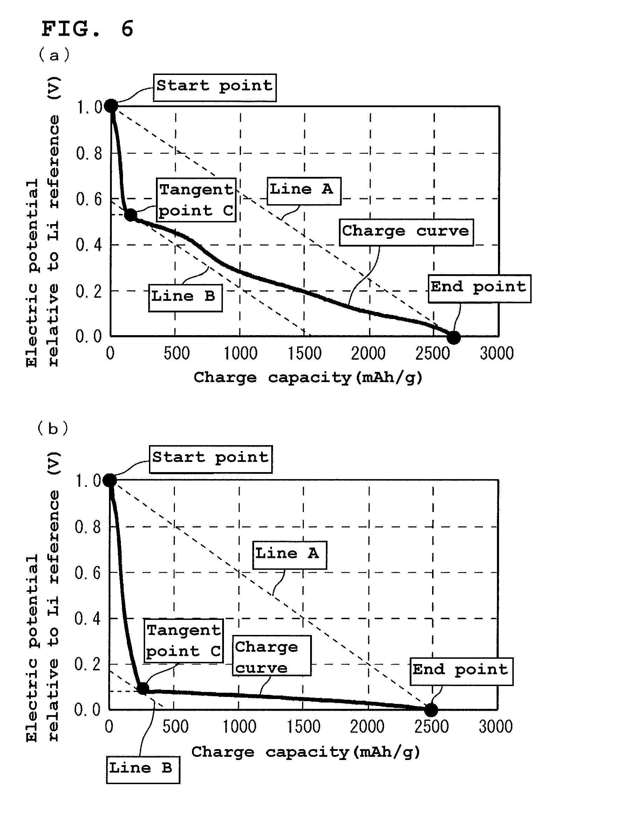

FIG. 6(a) and (b) each are charts, each describing a method for obtaining a charge electric potential defined in the present invention based on the initial charge curve by means of the low-speed charge, in which FIG. 6(a) shows a charge curve for Inventive Example 1 of the present invention, and FIG. 6(b) shows a charge curve for Comparative Example 1. FIGS. 6(a) and (b) each shows a relation between the charge capacity and the electric potential relative to the Li reference measured upon initial charging by means of the low-speed charge according to the description in the embodiment section described later, FIG. 6(a) is the charge curve according to Inventive Example 1 of the present invention, and FIG. 6(b) is the charge curve according to Comparative Example 1.

When the charge electric potential is obtained from the initial charge curve, a start point is set to a point where the charge capacity is 0 mAh/g and the electric potential relative to the Li reference is 1.0 V, an end point is set to a point where the electric potential relative to the Li reference reaches 0 V on the charge curve, and the start point and end point are connected with each other by a straight line (referred to as "line A" hereinafter) as shown in FIGS 6(a) and (b). A straight line (referred to as "line B" hereinafter) parallel with a line A, and is tangent to the charge curve is then drawn. On this occasion, if there are multiple lines which are parallel with the line A, and are tangent to the charge curve, a line having the shortest distance to the origin (0 mAh /g, 0 V) is set as the line B. An electric potential at a tangent point C between the straight line B and the charge curve is set as the charge electric potential.

### 2-2 Evaluation method for formed state of conductive carbon film

The negative electrode material powder according to the present invention "include an electrically conductive carbon film on a surface of lower silicon dioxide powder" means that a value Si/C of a molar ratio of Si to C is equal to or less than 0.02 as a result of a surface analysis of the lower silicon oxide powder to which the treatment for forming the conductive carbon film is applied by using the X-ray photoelectron spectroscopic analyzer (XPS) using AlK_{α} ray (1486.6 eV). Measurement conditions by the XPS are described in Table 2. "Si/C is equal to or less than 0.02" refers to a state where the surface of the lower silicon oxide powder is mostly covered with C and almost no Si is exposed.

[Table 2]

**Table 2**

| Device | Quantera SXM (manufactured by PHI Inc.) |
|---|---|
| Excited X ray | A1 Kα ray (1486.6 eV) |
| Photoelectron take-off angle | 45° |
| Correction for binding energy | C1s main peak is set as 284.6 eV |
| Electron orbitals | C1s, Si2p |

### 2-3. Measurement method for carbon film ratio

A carbon film ratio is calculated from the mass of the negative electrode material powder, and a result of carbon quantity quantitatively evaluated by analyzing CO₂ gas by means of the oxygen gas flow combustion-infrared absorption method using a carbon density analysis device (manufactured by Leco Corporation, CS400). A ceramic crucible is used as a crucible, copper is used as an accelerator, and an analysis time period is 40 seconds.

### 2-4. Measurement method for specific surface area of negative electrode material powder

The specific surface area of the negative electrode material powder can be measured by the following BET method. A specimen of 0.5 g is put into a glass cell, and is depressurized and dried for approximately five hours at 200°C. Then, the specific surface area is calculated from a nitrogen gas absorption isotherm at the liquid nitrogen temperature (-196°C) measured for this specimen. Measurement conditions are shown in Table 3.

[Table 3]

**Table 3**

| Device | BELSORP-18PLUS-HT (manufactured by BEL JAPAN INC.) |
|---|---|
| Measurement mode | -isothermal absorption process is measured by multi-point method |
| | -linear regression for relative pressure of 0.1-0.3 |
| Saturated vapor pressure | 101.3 kPa |
| Measured relative pressure | 0-0.4 |
| Equilibrium setting time | 180 seconds after equilibrium pressure is achieved |

### 2-5. Measurement method for O content

An O content in the negative electrode material powder is calculated from an O content in a specimen of 10 mg quantitatively evaluated by analyzing the specimen by means of inert gas fusion/infrared absorption method using an oxygen density analysis device (manufactured by Leco Corporation, TC436).

### 2-6. Measurement method for Si content

Si content in the negative electrode material powder is calculated from Si content in a quantitatively evaluated specimen by analyzing a solution obtained by adding nitric acid and hydrofluoric acid to the specimen by means of an ICP optical emission spectrometry device (manufactured by Shimadzu Corporation). In this method, Si, SiO, and SiO₂ are dissolved, and Si as constituent in these can be detected.

### 2-7. Calculation method for the value of x in SiOₓ

The value of x in SiOₓ is a molar ratio (O/Si) of an O content to Si content in the negative electrode material powder, and is calculated by using the O content and the Si content measured by the above-described measurement methods.

### 3. Manufacturing method for lower silicon oxide powder

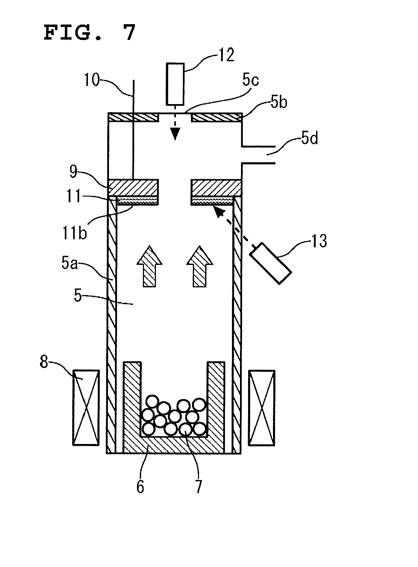

FIG. 7 is a schematic diagram showing a configuration example of a manufacturing device for lower silicon oxide. The device includes a vacuum chamber 5, wherein a bottom portion of side walls of the vacuum chamber 5 is formed by a quartz tube 5a in a double-wall structure, and a top wall is formed by a window plate 5b. Moreover, the vacuum chamber 5 includes an outlet 5d for discharging the atmosphere in the chamber to the upper part of the side wall, and a window portion 5c on the top wall. A carbon crucible 6 filled with raw materials 7 and a substrate 9 on which supplied silicon oxide (SiO) gas is vapor-deposited are disposed in the vacuum chamber 5. The substrate 9 has a structure through which cooling water communicates, and has a pipe 10 for supplying/discharging the cooling water to/from the substrate 9.

A high-frequency coil 8 which is a heating source is disposed outside the vacuum chamber 5 so as to surround the crucible 6, and the high-frequency coil 8 heats the raw materials filled in the crucible 6 by means of high-frequency induction. Moreover, a radiation thermometer 12 for measuring the temperature of the raw materials heated in the crucible, and a radiation thermometer 13 for measuring the temperature of a vapor deposition surface 11b of deposited silicon oxide vapor-deposited on the substrate 9 are disposed outside the vacuum chamber 5. The radiation thermometer 12 for measuring the heated raw materials is disposed immediately above the crucible 6, and carries out the measurement from the window portion 5c of the top wall of the vacuum chamber 5. The radiation thermometer 13 for measuring the vapor deposition surface 11b of the deposited silicon oxide carries out the measurement from a window portion which is provided on the quartz tube 5a constructing the vacuum chamber, and is not shown.

When the lower silicon oxide powder is manufactured using the manufacturing device shown in FIG. 7, used are mixed granulated raw materials 7 obtained by combining, mixing, granulating, and drying silicon powder and silicon dioxide powder as the raw materials at a predetermined proportion. The mixed granulated raw materials 7 are filled in the crucible 6, and are heated by the high-frequency coil 8 in vacuum to 1100-1400°C, thereby generating (subliming) silicon oxide (SiO) gas. The silicon oxide gas generated by the sublimation moves upward (refer to hatched arrows in FIG. 7), is vapor-deposited on the cooled substrate 9, and is deposited as deposited silicon oxide (SiOₓ) 11.

As described before, when the deposited silicon oxide is obtained, if the temperature of the deposited silicon oxide 11 exceeds 900-1000°C, the deposited silicon oxide 11 can be disproportionated into silicon and silicon oxide. Therefore, the quantity of the cooling water supplied to the substrate 9 is adjusted according to the temperature of the vapor deposition surface 11b of the deposited silicon oxide measured by the radiation thermometer 13, the temperature of the vapor deposition surface 116 of the deposited silicon oxide measured by the radiation thermometer 13 is controlled to be equal to or less than 950°C, and the film thickness of the deposited silicon oxide is set to be equal to or less than 8 µm.

The temperature of most of the deposited silicon oxide on the substrate is equal to or less than 900°C by controlling the vapor deposition surface temperature of the deposited silicon oxide measured by the radiation thermometer 13 to be equal to or less than 950°C, and the deposited silicon oxide is restrained from being disproportionated. The vapor deposition surface temperature of the deposited silicon oxide is preferably controlled to be equal to or less than 900°C.

A reason for setting the film thickness of the deposited silicon oxide to be equal to less than 8 µm, which is a thin film, is that if the deposited silicon oxide is a thick film, the thermal insulation property is high (low in thermal conductivity), it is hard to control the vapor deposition surface temperature of the deposited silicon oxide to be equal to or less than 950°C and the deposited silicon oxide can be disproportionated. The film thickness of the deposited silicon oxide can be controlled by adjusting the quantity of the raw materials to be filled in the crucible.

After the deposition is finished, the deposited silicon oxide 11 is detached from the substrate 9, the amorphous lower silicon oxide powder according to the present invention is acquired by pulverizing the deposited silicon oxide 11 by means of a ball mill or the like.

### 4. Forming method for conductive carbon film

The formation of the conductive carbon film on the surface of the lower silicon oxide powder is carried out by the CVD or the like. Specifically, a rotary kiln is used as a device, and a mixed gas of a hydrocarbon gas or an organics-bearing gas and an inert gas is used as the source gas.

The treatment temperature for forming the conductive carbon film is 600 -900°C. Moreover, the treatment time is 20-120 minutes, and is set according to the thickness of the conductive carbon film to be formed. The treatment time is in a range which does form SiC in the neighborhood of an interface between the surface of the lower silicon oxide powder and the carbon film. A discharge capacity of a lithium ion secondary battery using the lower silicon oxide powder as the negative electrode material powder can be improved by forming the electrically conductive carbon film on the lower silicon oxide powder as an insulator.

### 5. Heat treatment method for lower silicon oxide powder on which conductive carbon film is formed

Heat treatment is applied to the lower silicon oxide powder on which the conductive carbon film is formed in vacuum at 600-750°C for one hour or less. Vacuumizing for the heat treatment is carried out by an oil diffusion pump, and the internal pressure is maintained to be equal to or less than 1 Pa while measured by a Pirani gauge. As a result, a tar component remaining in the conductive carbon film is removed, thereby increasing electric conductivity. When the heat treatment temperature is within the above-described range, SiC is restrained from being generated in the neighborhood of the interface between the silicon oxide and the carbon film.

### 6. Configuration of lithium ion secondary battery

A description will now be given of a configuration example of a lithium ion secondary battery in a coin shape using the lithium ion secondary battery negative electrode material powder and the lithium ion secondary battery negative electrode according to the present invention referring to FIG. 1. The basic configuration of the lithium ion secondary battery shown in FIG. 1 is as described before.

A negative electrode material used for the negative electrode 2, namely a working electrode 2c constructing the lithium ion secondary battery negative electrode according to the present invention is formed by using the lithium ion secondary battery negative electrode material powder according to the present invention. Specifically, the negative electrode material can be constituted by the lithium ion secondary battery negative electrode material powder, as one active material, according to the present invention, other active materials, a conductive additive, and a binder. Among the constituting materials in the negative electrode materials, the proportion of the lithium ion secondary battery negative electrode material powder according to the present invention to the total of the constituting materials except for the binder is equal to or more than 20 mass %. The active materials other than the lithium ion secondary battery negative electrode material powder according to the present invention do not necessarily have to be added. As the conductive additive, acetylene black, carbon black, and Ketjenblack can be used, for example, and, as the binder, polyacrylic acid (PAA), polyvinylidene fluoride, and PI (polyimide) can be used.

The lithium ion secondary battery according to the present invention using the lithium ion secondary battery negative electrode material powder and the lithium ion secondary battery negative electrode according to the present invention has large discharge capacity and excellent cycle characteristics, which can be durable in practical use.

Moreover, the negative electrode material powder according to the present invention and a negative electrode using them can be applied to a capacitor.

### Examples

The following tests using a lithium ion secondary battery were carried out, and the results were evaluated in order to confirm effects of the present invention.

### [Test Conditions]

The manufacturing device for the lower silicon oxide shown in FIG. 7 was used, and the lower silicon oxide powder is obtained by the procedure described in "3. Manufacturing method for lower silicon oxide powder". When the deposited silicon oxide was acquired, according to the temperature of the vapor deposition surface 11b of the deposited silicon oxide measured by the radiation thermometer 13, the cooling water quantity supplied to the substrate was adjusted, and the temperature of the deposition surface 11b of the deposited silicon oxide measured by the radiation thermometer 13 was controlled to be the predetermined temperature. Moreover, the film thickness of the deposited silicon oxide was controlled to be equal to or less than 8 µm by adjusting the quantity of the raw material filling the crucible.

Further, the output of the high-frequency coil 8 was adjusted corresponding to the temperature of the heated raw materials measured by the radiation thermometer 12, thereby controlling the temperature of the heated raw materials to be 1200°C. MU-1700D manufactured by SEKISUI CHEMICAL CO., LTD. was used as the high-frequency coil 8 and IR-SAI10N manufactured by CHINO corporation were used as the radiation thermometers for measuring the temperature of the heated raw materials and the vapor deposition surface of the deposited lower silicon oxide.

When the deposited silicon oxide was collected from the substrate 9, an aluminum foil was wound on a portion of the substrate 9 where the silicon oxide gas was supplied in order to promote the operation, thereby acquiring the deposited silicon oxide deposited on a surface of the aluminum foil. The acquired deposited silicon oxide was taken out along with the aluminum foil, and the aluminum foil was removed by melting the aluminum foil by a hydrochloric acid treatment. The deposited silicon oxide from which the aluminum foil was removed was pulverized into powder having a mean particle diameter (D₅₀) of 4.8 µm by using a ball mill made of alumina for 24 hours. The ball mill made of alumina having a ball diameter of 20 mm and including a pot made of alumina was used, and the pulverizing was carried out by setting the number of rotation to 60 rpm.

In a part of the test, according to the procedures in "4. Forming method for conductive carbon film" and "5. Heat treatment method for lower silicon oxide powder on which conductive carbon film is formed", after the conductive carbon film was formed on the surface of the lower silicon oxide powder, the heat treatment was applied to the lower silicon oxide powder on which the conductive carbon film was formed. When the conductive carbon film was formed, a rotary kiln was used as the device, and a mixed gas of C₃H₈ and Ar was used as the gas, and a predetermined treatment temperature was maintained for 20 minutes. The heat treatment for the lower silicon oxide powder on which the conductive carbon film was formed was carried out under such conditions as an Ar gas atmosphere at 700°C for an hour. The carbon film ratio of each lower silicon oxide powder on which the conductive carbon film was formed was 2.5 mass %.

The acquired lower silicon oxide powder is measured by the X-ray diffractometer using the CuK_{α} ray, and presence/absence of the strongest line peak of Si(111) appearing at the diffraction angle (2θ)=28.4±0.3° was investigated from an acquired diffraction chart. Moreover, the powder of the lower silicon oxide (SiOₓ) satisfied such conditions as a specific surface area measured by means of the BET method of 0.3-3 m²/g and x=1 in any tests.

According to the procedure described in "2-1. Method for obtaining charge electric potential upon initial charging", the lithium ion secondary battery in the coin shape shown in FIG. 1 was produced using the lower silicon oxide powder, the capacity and the voltage upon initial charge by means of the low-speed charge were measured using the produced lithium ion secondary battery, and the charge electric potential was obtained from an acquired initial charge curve.

Moreover, a charging/discharging test of 20 cycles was carried out by using the produced lithium ion battery in the coin shape, and the discharge capacity was measured for the initial cycle and the 20th cycle, thereby investigating the cycle characteristic. A secondary battery charging/discharging test device (manufactured by Nagano Corporation) was used for the charging/discharging test. The charging was carried out by means of a constant current charge at a value corresponding to 0.1 C (150 mA/g per 1 g of the lower silicon oxide powder) if the discharge capacity of the lower silicon oxide powder is 1500 mAh/g until the voltage between the both electrodes of the lithium ion secondary battery reached zero (0) V. The discharge was carried out by means of a constant current discharge at 0.1 C until the voltage between both the electrodes of the lithium ion secondary battery reached 1.0 V.

Table 4 shows test sections, temperatures (°C) to which the vapor deposition surface of the deposited silicon oxide was controlled to attain, treatment temperatures (°C) upon forming the conductive carbon film, the presences/absences of the Si peak in the X ray diffraction (XRD), the charge electric potentials (V) relative to the Li reference upon initial charging by means of the low speed charge, and the initial discharge capacities (mAh/g), the discharge capacities (mAh/g) at the 20th cycle, and the cycle characteristics (%) in the charging/discharging test. On this occasion, the cycle characteristic (%) shown in Table 4 is a sustainability ratio of the discharge capacity at the 20th cycle to the initial discharge capacity.

[Table 4]

**Table 4**

| Classification | Manufacturing conditions/characteristics of lower silicon oxide powder | | | Characteristics of lithium ion secondary battery | | | |
|---|---|---|---|---|---|---|---|
| | Controlled temperature of vapor deposition surface (°C) | Treatment temperature upon carbon film forming (°C) | Presence/absence of Si peak in XRD | Charge electric potential upon initial charging (V vs. Li⁺/Li) | Initial discharge capacity (mAh/g) | Discharge capacity at 20th cycle (mAh/g) | Cycle characteristic (%) |
| Inventive Example 1 | 700 | Without formation treatment | × | 0.52 | 1496 | 1233 | 82.4 |
| Inventive Example 2 | 550 | Without formation treatment | × | 0.59 | 1522 | 1269 | 83.4 |
| Inventive Example 3 | 900 | Without formation treatment | ○ | 0.47 | 1485 | 1208 | 81.3 |
| Inventive Example 4 | 700 | 700 | × | 0.60 | 1776 | 1457 | 82.0 |
| Comparative Example 1 | 1100 | Without formation treatment | ○ | 0.08 | 1440 | 982 | 68.2 |
| Comparative Example 2 | 1000 | Without formation treatment | ○ | 0.18 | 1463 | 1016 | 69.4 |
| Comparative Example 3 | 700 | 1000 | ○ | 0.33 | 1621 | 1112 | 68.6 |

### [Test Result]

The temperature of the vapor deposition surface was controlled to be 1100 and 1000°C for disproportionating the deposited silicon oxide in Comparative Examples 1 and 2 from the result shown in Table 4, and the pulverized lower silicon oxide powder had Si peaks in the X ray diffraction, namely, the lower silicon oxide powder were disproportionated. An electric potential plateau due to the generation of the Li silicate as shown in FIG. 5 was not observed upon initial charging by means of the low-speed charge in the lithium ion secondary batteries obtained in Comparative Examples 1 and 2, and the charge electric potentials relative to the Li reference were 0.08 and 0.18 V. Moreover, the cycle characteristics were 68.2 and 69.4 %.

Meanwhile, although the temperature of the vapor deposition surface of the deposited silicon oxide was controlled to be 900°C in order to restrain the deposited silicon oxide from being disproportionated in Inventive Example 3 of the present invention, the pulverized lower silicon oxide powder had an Si peak in the X ray diffraction and a part of the lower silicon oxide powder was disproportionated. The lithium ion secondary battery obtained in Inventive Example 3 of the present invention had a charge electric potential relative to the Li reference upon initial charging of 0.47 V and the cycle characteristic of 81.3 %.

Moreover, the temperatures of the vapor deposition surfaces of the deposited silicon oxide were controlled to be 700 and 550°C in order to restrain the deposited silicon oxide from being disproportionated in Inventive Examples 1 and 2 of the present invention, and the pulverized lower silicon oxide powder did not have a Si peak in the X ray diffraction, namely the deposited silicon oxide was restrained from being disproportionated. An electric potential plateau due to the generation of the Li silicate as shown in FIG. 5 was observed upon initial charging by means of the low-speed charge in the lithium ion secondary batteries obtained in Inventive Examples 1 and 2 of the present invention, and the charge electric potentials relative to the Li reference were 0.52 and 0.59 V. Moreover, the cycle characteristics ware 82.4 and 83.4 %.

As a result, the fact that the charge electric potential relative to the Li reference upon initial charging and the cycle characteristic have a correlation, and if the charge electric potential relative to the Li reference upon initial charging is equal to or more than 0.45 V, the Li silicate having high capability of suppression of the volume expansion upon initial charging are uniformly generated, resulting an improved cycle characteristic is confirmed.

Moreover, while the initial discharge capacities are 1440 and 1463 mAh/g in Comparative Examples 1 and 2, the initial discharge capacities are 1485-1522 mAh/g, which are excellent values, in Inventive Examples 1 to 3 of the present invention. As described above, the fact that a lithium ion secondary battery having a large discharge capacity and an excellent cycle characteristic can be produced from the negative electrode material powder according to the present invention was found.

The conductive carbon film was formed on the surface of the lower silicon oxide powder restrained in disproportionation of Inventive Example 1 of the present invention in Inventive Example 4 of the present invention and Comparative Example 3. The treatment temperature for forming the carbon film is 1000°C in Comparative Example 3, the lower silicon oxide powder on which the carbon film was formed had a peak of Si in the X ray diffraction, and a part of the lower silicon oxide powder were disproportionated. The lithium ion secondary battery obtained in Comparative Example 3 of the present invention had a charge electric potential relative to the Li reference upon initial charging of 0.33 V and the cycle characteristic of 68.6%.

Meanwhile, the treatment temperature for forming the carbon film was 700°C in Inventive Example 4 of the present invention and the lower silicon oxide powder on which the carbon film was formed did not have a peak of Si in the X ray diffraction. Namely, the lower silicon oxide powder were restrained from being disproportionated in Inventive Example 4 of the present invention, the lithium ion secondary battery using the lower silicon oxide powder had a charge electric potential relative to the Li reference upon initial charge of 0.60 V and a cycle characteristic of 82.0%.

Further, while the initial discharge capacities were 1485-1522 mAh/g in Inventive Examples 1-3 of the present invention where the carbon film was not formed on the surface of the lower silicon oxide powder, the initial discharge capacity was 1776 mAh/g, which is excellent value, in Inventive Example 4 of the present invention where the carbon film was formed. As a result, the fact that the negative electrode material powder according to the present invention has a conductive carbon film on the surface and thus can have improved discharge capacity was found.

### INDUSTRIAL APPLICABILITY

A lithium ion secondary battery and a capacitor having a large discharge capacity with excellent cycle characteristics, which can be durable in practical use can be provided by using the negative electrode material powder for lithium ion secondary batteries, and the lithium ion secondary battery negative electrode or the capacitor negative electrode according to the present invention. Moreover, the lithium ion secondary battery and the capacitor according to the present invention have a large discharge capacity with excellent cycle characteristics. The present invention is thus an effective technique in the field of secondary batteries and capacitors.

### REFERENCE SIGNS LIST

1: Positive electrode
1a: Counter electrode case
1b: Counter electrode current collector
1c: Counter electrode
2: Negative electrode
2a: Working electrode case
2b: Working electrode current collector
2c: Working electrode
3: Separator
4: Gasket
5: Vacuum chamber
5a: Quartz tube
5b: Window plate
5c: Window portion
5d: Outlet
6: Crucible
7: Mixed granulated raw materials
8: High-frequency coil
9: Substrate
10: Cooling water pipe
11: Deposited silicon oxide
11a: Interface with substrate
11b: Vapor deposition surface
12: Radiation thermometer (for measuring raw materials)
13: Radiation thermometer (for measuring vapor deposition surface)

## Claims

1. A negative electrode material powder for lithium ion secondary batteries comprising a lower silicon oxide powder as a negative electrode material, **characterized in that** a charge electric potential is 0.45-1.0 V relative to a Li reference upon initial charging.

2. The negative electrode material powder for lithium ion secondary batteries according to claim 1, **characterized in that** the surface of the lower silicon oxide powder comprises an electrically conductive carbon film.

3. The negative electrode material powder for lithium ion secondary batteries according to claim 2, **characterized in that** the proportion of the electrically conductive carbon film to the surface of the lower silicon oxide powder is 0.2-10 mass %.

4. The negative electrode material powder for lithium ion secondary batteries according to any of claims 1 to 3, **characterized in that** a maximum value P1 of a halo derived from SiOₓ appearing at 2θ=10°-30° and a maximum value P2 of the strongest line peak of Si (111) appearing at 2θ=28.4±0.3° measured by an X-ray diffractometer using CuK_{α} ray satisfy P2/P1<0.01.

5. The negative electrode material powder for lithium ion secondary batteries according to any of claims 1 to 4, **characterized in that** a specific surface area measured by means of the BET method is 0.3-5 m²/g.

6. A negative electrode for lithium ion secondary batteries or a negative electrode for capacitors using the negative electrode material powder for lithium ion secondary batteries according to any of claims 1 to 5.

7. A lithium ion secondary battery or a capacitor using the negative electrode for lithium ion secondary batteries or the negative electrode for capacitors according to claim 6.
